(19) Europäisches Patentamt
European Patent Office
Office européen des brevets

(11) **EP 4 550 608 A2**

(12) **EUROPEAN PATENT APPLICATION**

(43) Date of publication:
07.05.2025 Bulletin 2025/19

(21) Application number: 24208184.2

(22) Date of filing: 22.10.2024

(51) International Patent Classification (IPC):
*H02J 3/38* (2006.01)        *H02J 3/46* (2006.01)

(52) Cooperative Patent Classification (CPC):
**H02J 3/381; H02J 3/46;** H02J 2203/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 26.10.2023 US 202318495365

(71) Applicant: **ABB SCHWEIZ AG
5400 Baden (CH)**

(72) Inventors:
• **MISCIO, Jacob T.
Raleigh 27601 (US)**
• **JOSHI, Aniket M.
Raleigh 27606 (US)**
• **CHOOBINEH, Moein
Morrisville 27560 (US)**
• **SURYANARAYANA, Harish
Apex 27523 (US)**

(74) Representative: **Maiwald GmbH
Engineering
Elisenhof
Elisenstrasse 3
80335 München (DE)**

(54) **PARAMETERIZATION FOR GRID-CODE COMPLIANT LOW VOLTAGE AC MICROGRID CONTROLLER**

(57)    A method for operating a controller for a microgrid includes obtaining (1310) a set of parameter data characterizing one or more regulation curves of one or more national grid codes. The one or more regulation curves relate to a set of functional variables for point of common coupling (PCC) functions performed by the controller. The method further includes configuring (1320) messages to a plurality of distributed energy resources (DERs) interconnected to the PCC. The messages are configured for reading input data from registers of each DER. The method further includes performing (1330) the PCC functions to control the microgrid according to at least one of the one or more regulations curves, based on a subset of the input data from each DER that relates to the set of functional variables.

obtaining a set of parameter data characterizing one or more regulation curves of one or more national grid codes, the one or more regulation curves relating to a set of functional variables for point of common coupling (PCC) functions performed by the controller — 1310

configuring messages to a plurality of distributed energy resources (DERs) interconnected to the PCC, the messages for reading input data from registers of each DER — 1320

performing the PCC functions to control the microgrid according to at least one of the one or more regulations curves, based on a subset of the input data from each DER that relates to the set of functional variables — 1330

*FIG. 13*

EP 4 550 608 A2

**Description**

FIELD

Embodiments of the present disclosure relate to a method, device and computer-readable medium for operating a low voltage AC microgrid controller.

BACKGROUND

A microgrid is a local electrical grid with defined electrical boundaries, acting as a single controllable entity. A microgrid can include distributed energy resources (DERs), such as photovoltaic devices (PVs), wind turbines, battery energy storage systems (BESS's), and loads. A microgrid can operate in either grid connected mode or island mode. In the grid connected mode, the microgrid operates connected to and synchronous with the traditional wide area grid (macro-grid). In the island mode, there is no support from the wide area grid, and the microgrid functions autonomously. Microgrid configuration can be direct current (DC), alternating current (AC), or hybrid. An AC microgrid can be operated in conjunction with a wide area grid.

Various countries and regions in the world have developed their own grid codes for microgrids, such as the American IEEE 1547 code, the Italian CEI0-16 code, and the German VDE AR4110 code. Each grid code can specify a number of regulation curves for managing microgrids. A microgrid controller needs to manage the DERs in the microgrid while complying with a given grid code. The microgrid controller also needs to sort through input data from the DERs to obtain the data relevant to managing the microgrid.

SUMMARY

Embodiments of the present disclosure provide a method for operating a controller for a microgrid. The method includes obtaining a set of parameter data characterizing one or more regulation curves of one or more national grid codes. The one or more regulation curves relate to a set of functional variables for point of common coupling (PCC) functions performed by the controller. The method further includes configuring messages to a plurality of distributed energy resources (DERs) interconnected to the PCC. The messages are configured for reading input data from registers of each DER. The method further includes performing the PCC functions to control the microgrid according to at least one of the one or more regulations curves, based on a subset of the input data from each DER that relates to the set of functional variables.

BRIEF DESCRIPTION OF THE DRAWINGS

Subject matter of the present disclosure will be described in even greater detail below based on the exemplary figures. All features described and/or illustrated herein can be used alone or combined in different combinations. The features and advantages of various embodiments will become apparent by reading the following detailed description with reference to the attached drawings, which illustrate the following:

FIG. 1 shows an exemplary structure of an AC microgrid according to some embodiments;

FIG. 2 shows an exemplary flowchart illustrating a method of operating a microgrid controller according to some embodiments;

FIG. 3 shows two active power vs voltage curves (Volt-Watt) of the IEEE 1547 code;

FIG. 4 shows an reactive power vs voltage curve (Volt-Var) of the IEEE 1547 code;

FIG. 5 shows an reactive power vs active power curve (Watt-Var) of the IEEE 1547 code;

FIG. 6 shows the Volt-Var curve of the Italian CEI0-16 code;

FIG. 7 shows the Volt-Var curve of the German VDE-AR4110 code;

FIG. 8 shows a low voltage ride through curve from the IEEE 1547 code;

FIG. 9 shows a low voltage ride through curve from the CEI0-16 code;

FIG. 10 illustrates an example of low voltage ride through and high voltage ride through according to the IEEE 1547 code, according to some embodiments;

FIGS. 11A and 11B illustrate consecutive read messages to a plurality DERs according to some embodiments;

FIG. 12 shows an exemplary PQ polygon according to some embodiments;

FIG. 13 is a flowchart illustrating a method of operating a microgrid controller according to some embodiments; and

FIG. 14 is a simplified block diagram of a controller for controlling a microgrid according to some embodiments.

DETAILED DESCRIPTION

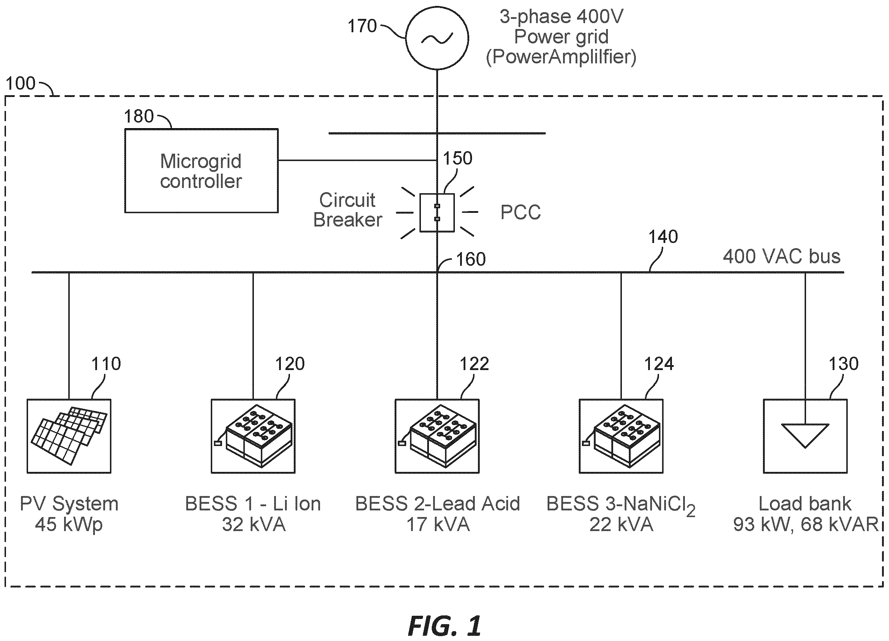

FIG. 1 shows an exemplary structure of an AC microgrid 100. In this example, the microgrid 100 includes a number of DERs, for example a PV system 110, three BESS's 120, 122, and 124 (e.g., a lithium ion battery, a lead acid battery, and a NaNiCl$_2$ battery), and a load bank 130. The DERs are interconnected via an AC bus 140. The connection point 160 is referred to as the point of common coupling (PCC). The microgrid 100 can be coupled to a wide area grid 170. A circuit breaker 150 can be disposed at the PCC 160. A microgrid controller 180 can be coupled to the PCC 160. The microgrid controller 180 can regulate the power flow from the DERs, and maintain quality and reliability of the microgrid. Power generated by the DERs is controlled according to the load demand. The aims of any control technique can include, for example, maintaining a constant voltage and a constant frequency of the microgrid.

Various countries and regions in the world have developed their own grid codes for microgrids. Exemplary grid codes include the American IEEE 1547 code, the Italian CE10-16 code, and the German VDE AR4110 code. Each grid code can specify a number of regulation curves. The regulation curves characterize functional variables that are important for PCC management, such as voltage, frequency, active power, reactive power, and the like. Exemplary regulation curves can include reactive power vs voltage curve (Volt-Var), reactive power vs active power curve (Watt-Var), reactive power vs power factor curve (PF-Var), active power vs voltage curve (Volt-Watt), frequency droop curve, voltage ride-through curves, and the like. When regulation curves of a given grid code overlap in the control of one or more functional variables, the grid code may have a priority list setting power priorities.

A microgrid controller can obtain input data from the DERs by accessing the registers of the DERs. Each DER manufacturer can have its own register maps (e.g., Modbus register maps). A Modbus register map can include a list defining what the data are, where the data are stored (e.g., in which registers), and how the data are stored. Since the field of microgrid is still in its infancy, there are no concrete rules yet in terms of which DERs can be included in the aggregate power control loop at the PCC. Currently, microgrid controllers need to sort through various load, source, and storage devices on a case-by-case basis to meet power requirements at the PCC. There is a need to streamline the parameterization of functions between national grid codes and the classification process for various types of DERs.

Embodiments of the present disclosure provide a method of initializing a low-voltage AC microgrid controller that can be readily adapted to comply with a variety of national grid codes and to read relevant data from a variety of DERs.

A generic data structure can be configured for holding parameterized data characterizing the regulation curves of various grid codes, and for storing register maps of the DERs for parsing relevant data from the DERs. As DERs enter and leave the microgrid, the microgrid controller can dynamically reshape the aggregate boundaries of the PCC control loop.

It is noted that the regulation curves of various national grid codes can have some common trends. For example, most regulation curves include piecewise linear regions, so that they can be characterized by a set of end points delineating the piecewise linear regions. Some regulation curves, such as the Volt-Var curve or the low voltage ride through curve, can have the same form across different national grid codes, only differing in the coordinate values of the end points. According to some embodiments, each regulation curve can be parametrized by the set of end points. The parameters are stored with a generic data structure defined by a set of functional variables.

According to some embodiments, the more prominent national grid codes, such as the American IEEE 1547 code, the Italian CEI0-16 code, and the German VDE AR4110 code, can be parameterized and preloaded into the microgrid controller as a library of national grid codes. Any new grid code can be parameterized by users (e.g., engineers) using the same generic data structure, and can be added to the library of national grid codes. The regulation curves of various grid codes often complement with one another. When there are overlaps, priorities can be set in a case structure. Adhering to one grid code may not preclude functions of another.

According to some embodiments, the microgrid controller can define a set of functional variables for PCC functions performed by the microgrid controller for managing the microgrid. A lookup table can be provided for linking the registers of a given DER to the set of functional variables. Read messages can be configured to read input data at all registers. A parser can sort through the larger set of input data to obtain a smaller subset of the input data that are related to the functional variables for the PCC functions, such as voltage, current, frequency, and the like. Embodiments of the present disclosure can streamline the characterization process for various national grid codes, and streamline the classification process for various types of DERs, which can afford robust control at the PCC while allowing for organic DER growth at industrial sites.

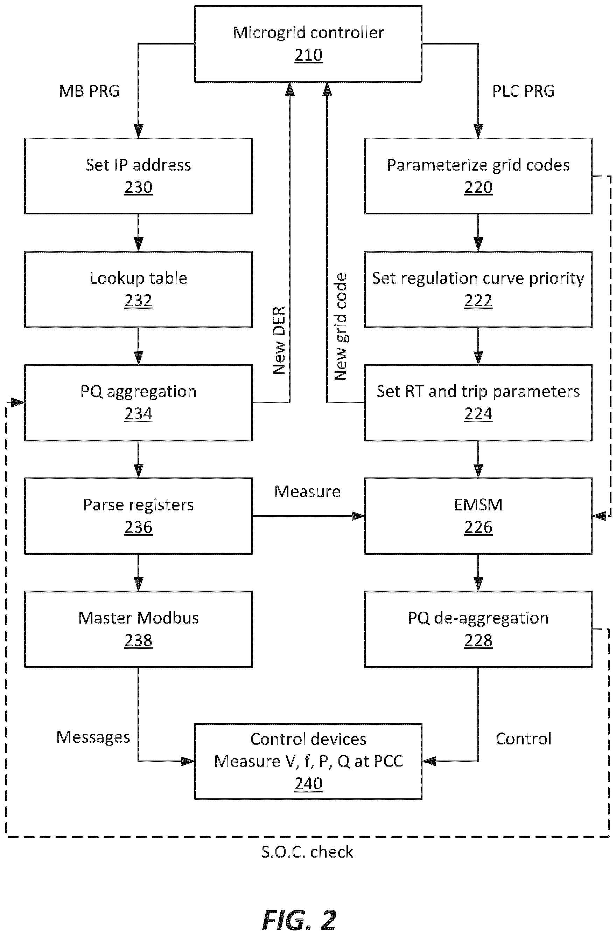

FIG. 2 shows an exemplary flowchart illustrating a method of operating a microgrid controller 210 according to some embodiments. The controller 210 is configured to run two programs in parallel. On the right hand side, a first program (e.g., a programmable logic controller program, or PLC PRG) can load tabulated characteristics from national grid codes and set parameters for PCC functions. On the left hand side, a second program (e.g., a Modbus program, or MB PRG) can perform data acquisition with Modbus subordinate functions. The PLC program and the Modbus program can run at their own rate, and can share data through the global variables.

For example, on the right hand side, at 220, the PLC program can parameterize the regulation curves of one or more national grid codes, such as the American IEEE 1547 code, the Italian CEI0-16 code, the German VDE AR4110 code, and the like. Some national grid codes may have multiple regulation curves. At 222, the PLC program can set regulation curve priorities among multiple regulation curves. At 224, the PLC program can set ride through (RT) and trip parameters (e.g., low voltage ride through or LVRT, high voltage ride through or HVRT). Steps 220, 222, and 224 are the initialization steps for parameterizing national grid codes, which will be described in more detail below. If it is a new grid code (or a custom code entered by a user), the parameters that characterize the regulation curves and ride through timers for the new code can be stored in the controller 210. If a grid code has already been parameterized and loaded in the controller 210, the PLC program can skip steps 222 and 224, and go to step 226.

On the left hand side, at 230, the Modbus program can set IP addresses for the registers of each DER. At 232, a lookup table can be used to map the functional variables for PCC functions to the register addresses of each DER. Steps 230 and 232 are the initialization steps for Modbus communication with the DERs, which will be described in more detail below. If it is a new DER that just entered the microgrid, the mapping data for the register addresses can be stored in the controller 210.

Once the initialization steps 220, 222, 224, 230, and 232 have been performed, the microgrid controller 210 can run the cyclical steps 226, 228, 234, 236, 238, and 240 to manage the microgrid. On the right hand side, at 226, an energy management state machine (EMSM) can select which PCC functions to run by the state and user preference (e.g., U.S. Patent Application Serial No. 18/363,375 filed on August 1, 2023, entitled "ENERGY MANAGEMENT STATE MACHINE FOR MICROGRIDS," describes a EMSM, the content of which is incorporated herein by reference). At 228, the active power and reactive power (PQ) de-aggregation is performed to allocate the active power and the reactive power to individual DERs. The PQ de-aggregation step 228 is described in more detail below.

On the left hand side, at 234, PQ aggregator is updated. For example, if a new DER has entered the microgrid, the microgrid controller 210 can update the aggregate PQ polygon characteristics, and update the polling rate on DERs according to the number of devices active in the microgrid. At 236, input data are read from the registers of each DER. The input data are parsed to obtain a subset of the input data that relates to the functional variables for PCC functions. The subset of the input data is input into the EMSM 226. At 238, the Modbus channel repeats its tasks continuously by first polling the breaker at the PCC, then the DERs, and finally sending commands. At 240, the data relating to the functional variables for PCC functions, such as voltage (V), frequency (f), active power (P), reactive power (Q), etc., are measured at the PCC. The PQ de-aggregation step 228 can also check the state of charge (S.O.C.) of each DER and classify as charged, balanced, or empty, which affects the PQ aggregator as described in more detail below.

Parameterize Regulation Curves

According to some embodiments, for step 220 in FIG. 2, the PLC program can pre-load characteristics of popular national electric grid codes for some distributed generation sites, such as the American IEEE 1547 code, the Italian CE10-16 code, the German VDE AR4110 code, and the like. Studying the various regulation curves of the various grid codes, some common patterns can be observed.

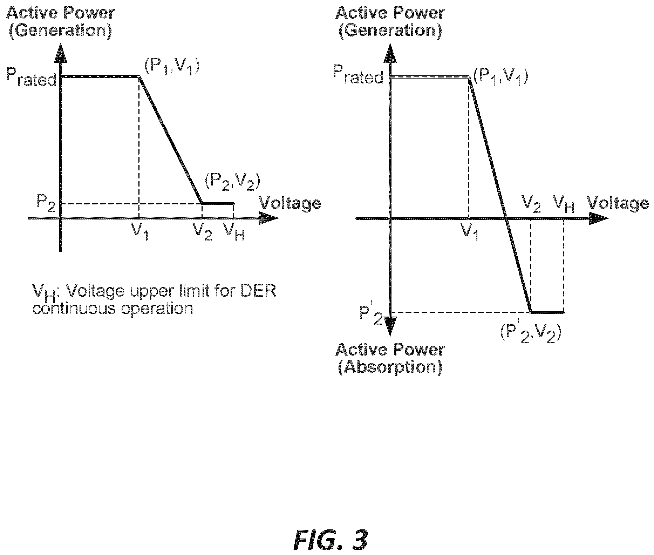

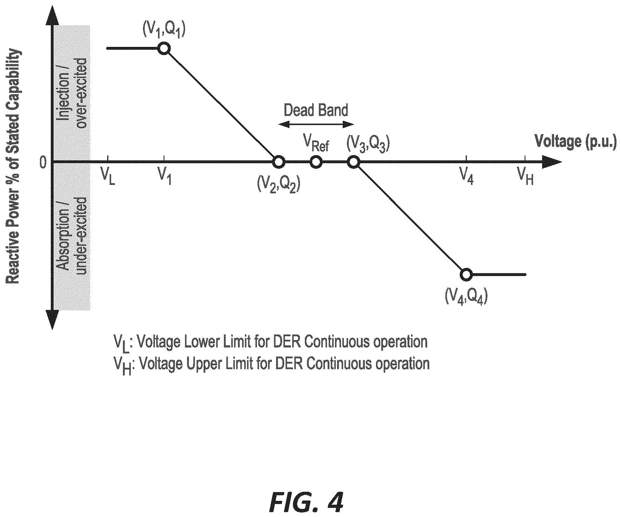

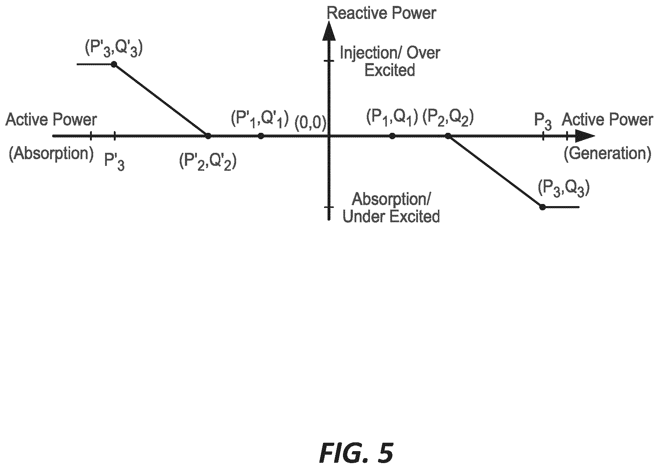

FIGS. 3, 4, and 5 show some exemplary regulation curves of the IEEE 1547 code. FIG. 3 shows two active power vs voltage curves (Volt-Watt); FIG. 4 shows an reactive power vs voltage curve (Volt-Var); and FIG. 5 shows an reactive power vs active power curve (Watt-Var). Note that each of these regulation curves includes several piecewise linear regions. For example, each Volt-Watt curve shown in FIG. 3 has a first horizontal linear region for $V < V_1$, a second linear region for $V_1 < V < V_2$, and a third horizontal linear region for $V > V_2$. One or two end points delineate each piecewise linear region. For example, the first linear region is defined by the end point $(P_1, V_1)$, the second linear region is defined by the end points $(P_1, V_1)$ and $(P_2, V_2)$, and the third linear region is defined by the end point $(P_2, V_2)$.

According to some embodiments, each regulation curve can be defined with variables in the form $(X, Y)$, such as $(P, V)$ for the Volt-Watt curve shown in FIG. 3, $(V, Q)$ for the Volt-Var curve shown in FIG. 4, and $(P, Q)$ for the Watt-Var curve shown in FIG. 5. An array parser can assign endpoints for each piecewise linear region. For example, the logic to specify each linear region in the Volt-Watt curve shown in FIG. 3 can be as follows: if $X < X1 <$ then $Y = Y1$; if $X1 < X < X2$ then $Y = (X-X1) * (Y2-Y1)/(X2-X1)$; if $X > X2$ then $Y = Y2$. Here, the X variable is the voltage V, and the Y variable is the active power P.

Table 1 is from the IEEE 1547 code that specifies the settings for the end points of the piecewise regions, e.g., $(P_1,V_1)$ and $(P_2,V_2)$, for category A and category B devices. A grid code may include several settings for a given regulation curve. For example, the IEEE 1547 code includes three tables for the voltage-active power settings. In some embodiments, each of the settings can be parameterized and saved in the controller.

Table 1

| Voltage-active power parameters | Values for DER | |
|---|---|---|
| | Category A | Category B |
| $V_1$ | 1.05 $V_N$ | 1.05 $V_N$ |
| $P_1$ | $P_{rated}$ | $P_{rated}$ |
| $V_2$ | 1.1 $V_N$ | 1.1 $V_N$ |
| $P_2$ (applicable to DER that can only generate active power) | The lesser of 0.2 $P_{rated}$ or $P_{min}$ | The lesser of 0.2 $P_{rated}$ or $P_{min}$ |
| $P'_2$ (applicable to DER that can generate and absorb active power) | $P'_{rated}$ | $P'_{rated}$ |
| Open loop response time | 90 s | 90 s |

As another example, for the Volt-Var curve shown in FIG. 4, the logic to classify each linear region can be as follows: if X < X1 < then Y = Y1; if X1 < X < X2 then Y = (X-X1) * (Y2-Y1)/(X2-X1); if X2 < X < X3 then Y = Y2; if X3 < X < X4, then Y = (X-X3) * (Y4-Y3)/(X4-X3); if X > X4, then Y = Y4. Here, the X variable is the voltage V, and the Y variable is the reactive power Q. Table 2 is from the IEEE 1547 code that specifies settings for the end points of the piecewise regions, e.g., $(V_1,Q_1)$, $(V_2,Q_2)$, $(V_3,Q_3)$, and $(V_4,Q_4)$.

Table 2

| Voltage-reactive power parameters | Default values for DER | |
|---|---|---|
| | Category A | Category B |
| $V_{ref}$ | $V_N$ | $V_N$ |
| $V_2$ | $V_N$ | 0.98 $V_N$ |
| $Q_2$ | 0 | 0 |
| $V_3$ | $V_N$ | 1.02 $V_N$ |
| $Q_3$ | 0 | 0 |
| $V_1$ | 0.9 $V_N$ | 0.92 $V_N$ |
| $Q_1$ | 25% of nameplate apparent power rating, injection | 44% of nameplate apparent power rating, injection |
| $V_4$ | 1.1 $V_N$ | 1.08 $V_N$ |
| $Q_4$ | 25% of nameplate apparent power rating, absorption | 44% of nameplate apparent power rating, absorption |
| Open loop response time, $T_r$ | 10 s | 5 s |

For the Watt-Var curve shown in FIG. 5, the piecewise linear regions can be classified in a similar way. Here, the X variable is the active power (P), and the Y variable is the reactive power (Q). Table 3 is from the IEEE 1547 code that specifies settings for the end points of the piecewise regions, e.g., $(P_1,Q_1)$, $(P_2,Q_2)$, $(P_3,Q_3)$, $(P_1',Q_1')$, $(P_2',Q_2')$, and $(P_3',Q_3')$.

Table 3

| Active power-reactive power parameters | Default values for DER | |
|---|---|---|
| | Category A | Category B |
| $P_3$ | $P_{rated}$ | |
| $P_2$ | $0.5\ P_{rated}$ | |
| $P_1$ | The greater of $0.2\ P_{rated}$ and $P_{min}$ | |
| $P'_1$ | The lesser of $0.2\ P'_{rated}$ and $P'_{min}$ | |
| $P'_2$ | $0.5\ P'_{rated}$ | |
| $P'_3$ | $P'_{rated}$ | |
| $Q_3$ | 25% of nameplate apparent power rating, absorption | 44% of nameplate apparent power rating, absorption |
| $Q_2$ | 0 | |
| $Q_1$ | 0 | |
| $Q'_1$ | 0 | |
| $Q'_2$ | 0 | |
| $Q'_3$ | 44% of nameplate apparent power rating, injection | |
| NOTE- $P_{rated}$ is the nampeplate active power rating of the DER. $P'_{rated}$ is the maximum active power that the DER can absorb. $P_{min}$ is the minimum active power output of the DER. $P'_{min}$ is the minimum, in amplitude, active power that the DER can absorb. $P'$ parameters are negative in value. | | |

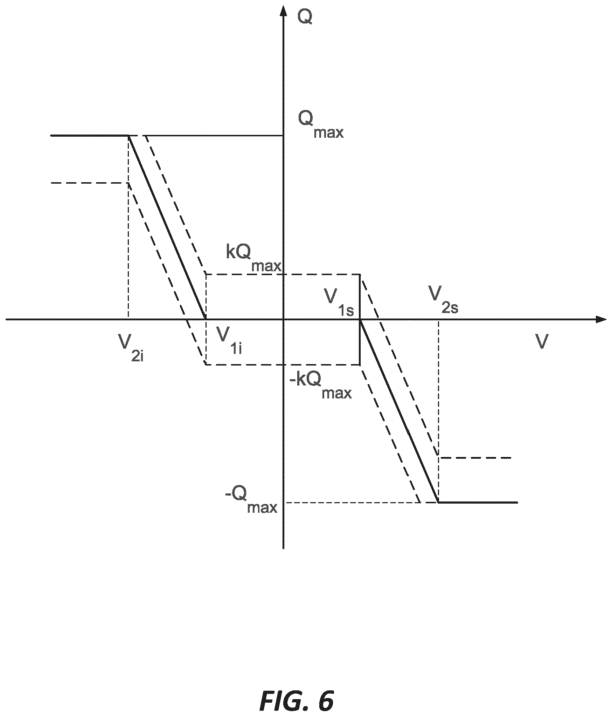

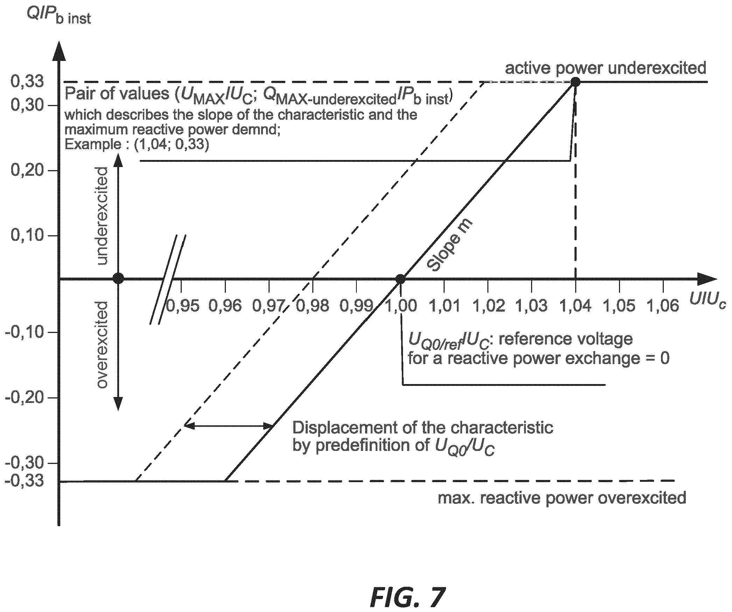

Regulation curves across different national grid codes may have similar trends. FIG. 6 shows the Volt-Var curve of the Italian CEI0-16 code. FIG. 7 shows the Volt-Var curve of the German VDE-AR4110 code (the positive vertical axis represents injection or under-excited region; the negative vertical axis represents absorption or over-excited region). Comparing the Volt-Var curves shown in FIGS. 4, 6 and 7, it can be noted that the Volt-Var curves for the IEEE 1547 code, the CE10-16 code, and the VDE-AR4110 code follow the same form. According to some embodiments, the values of the parameters (X1, Y1), (X2, Y2), (X3, Y3), and (X4, Y4), which define the end points of the piecewise linear regions, can be updated to fit a given regulation curve of a given regional standard. Thus, the updated parameters can stretch, shrink, or shift a regulation curve to new settings to comply with a given code.

Even a complete characterization of one code may still leave some parameters unaccounted for. For example, the IEEE1547 code does not have a priority list on regulation curves, deferring instead to distribution system operators (DSOs) to select a reactive power regulation curve and to choose between a constant P or Volt-Watt real power curve. According to some embodiments, a case structure is deployed to select between the limited number of choices. The CEI grid code has a default priority list on regulation curves, although this may be changed with priority coils as needed, leaving the controller to determine which curves to follow.

According to some embodiments, an algorithm calculates a 'p word' and 'q word' based on priorities. They are an important tool used to select which functions will provide power setpoints. The 'q word' is a prioritized byte of data made up of bitwise, binary elements or flags. For example: q-word := q-const + 2*q-pf + 4*q-v + ... Curves are assigned significance (MSB through LSB) based on power priority flags. In this case, Volt-Var flag, q-v is the MSB. When active, the q-word > 3 and Volt-Var is executed. When the q-word < 1, a default setpoint is used. The 'p word' involves nested if loops, often choosing between conflicting setpoints. For example, the Volt-Watt curve uses optimal energy setpoints to track when voltage is not high, but shifts to absorb more power as V(PCC) approaches 1.1*Vpu.

Parameterize Ride-Through Timers

The term low-voltage ride through (LVRT), also referred to as under-voltage ride through (UVRT) or fault ride through (FRT), describes a minimum tolerance of electrical systems in electrical networks against short-term voltage drops. An electrical generator may not immediately disconnect from the grid in the event of a voltage drop (also referred to as a voltage sag), but can continue to work for a certain period of time. The term high voltage ride through (HVRT) relates to handling of a voltage rise or swell.

When the voltage or frequency falls out of the normal operating region, the state machine can enter a condition in which it would trip if the disturbance persists until a timer expires. According to some embodiments, for step 222 in FIG. 2, a technique is deployed to tabulate the (X,Y) thresholds for ride through curves in a similar way as the regulation curves. The ride-through timer (the Y threshold) can be dependent on the severity of the voltage (or frequency) disturbance (the X threshold), as discussed below.

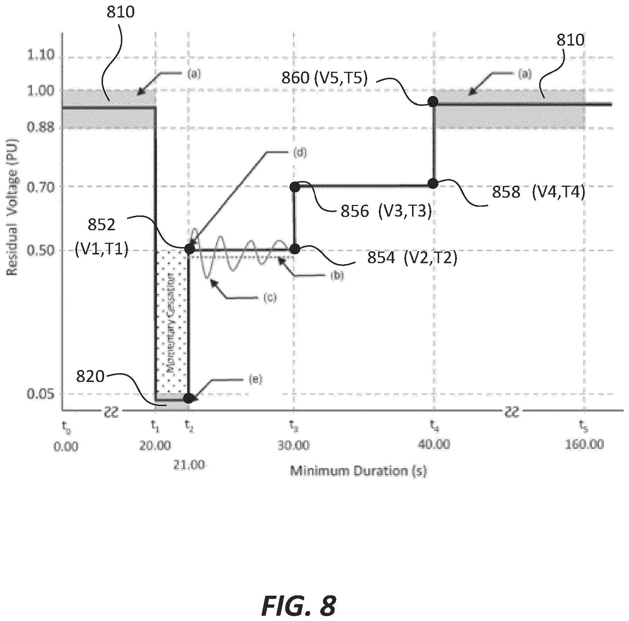

FIG. 8 shows a low voltage ride through (LVRT) curve from the IEEE 1547 code. The vertical axis is the residual voltage (normalized). The horizontal axis is the minimum duration (referred to as trip timer or ride through timer). Note that there are several step changes in the LVRT curve. The trip timer depends on the severity of the voltage drop from the normal operating condition. Table 4 is from the IEEE 1547 code that summarizes the trip timer for the various conditions.

Table 4

| Test condition | Residual voltage (p.u.) | Minimum duartion [a] (s) | From-To time | Required DER mode of operation[b] |
|---|---|---|---|---|
| A | 0.88-1.00 | 5 | $t_0$-$t_1$ | Continuous Operation |
| B | 0.00-0.05 | 1 | $t_1$-$t_2$ | Momentary Cessation |
| C | 0.00-0.50 | 10 | $t_1$-$t_3$ | Mandatory Operation[c] |
| C' | 0.52-0.70 | 10 | $t_1$-$t_3$ | Mandatory Operation[d] |
| D | 0.50-0.70 | 20 | $t_1$-$t_4$ | Mandatory Operation |
| E | 0.88-1.00 | 120 | $t_4$-$t_5$ | Continuous Operation |

In FIG. 8, the shaded voltage band 810 between the values of 0.88 and 1.00 is the normal operating voltage range. When the residual voltage lies within the voltage band 810 (test conditions A and E in Table 4), the microgrid is in continuous operation mode. The shaded voltage band 820 between the values of 0.00 and 0.05 is the momentary cessation voltage range. When the voltage lies between 0.00 and 0.05 (test condition B in Table 4), the microgrid is in a momentary cessation mode. When the voltage lies between 0.00 and 0.50 (test condition C in Table 4), the trip timer is 10 seconds. When the voltage lies between 0.52 and 0.70 (test condition C' in Table 4), the trip timer is also 10 seconds. When the voltage lies between 0.50 and 0.70 (test condition D in Table 4), the trip timer is 20 seconds. According to some embodiments, each step can be programmed with a unique timer that is independent of timers in adjacent regions. For example, a deviation below 0.5 for less than one second cannot reset the longer timer affected by disturbance $0.50 < V < 0.88$.

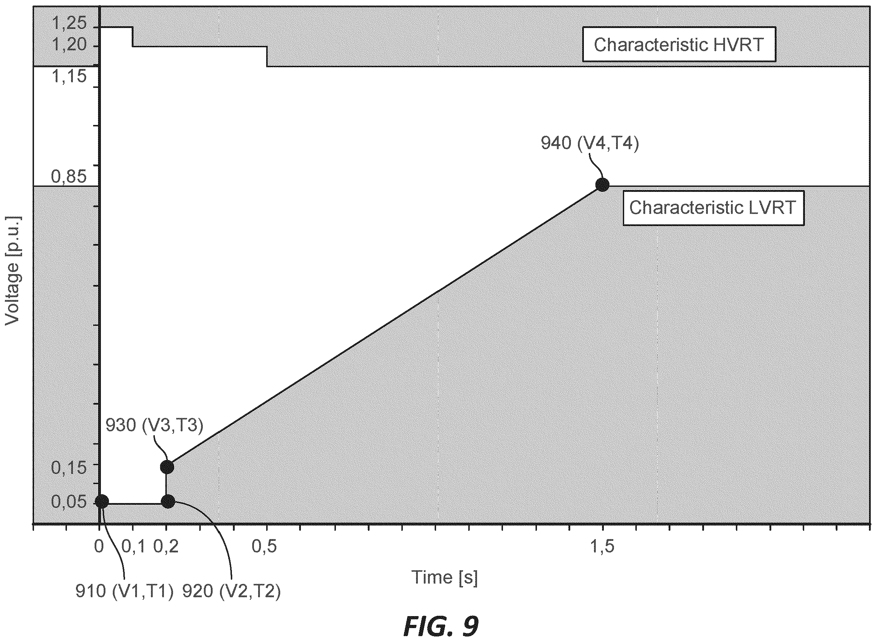

FIG. 9 shows an LVRT curve from the CEI0-16 code. Note that the trip timer has a linear relationship with the voltage. According to some embodiments, this is implemented with a sliding timer, with the trip timer (duration) inversely proportional to the voltage sag (i.e., the smaller the deviation from the normal operating voltage, the longer the trip timer). The timer can continuously adjust its hold time while voltage remains in the ride-through region. According to some embodiments, the trip timer (the duration of a voltage ride through) and the voltage thresholds to enter and remain in such a state are parameterized according to national grid codes (e.g., the IEEE 1547 code or the CEI0-16 code) or user configuration.

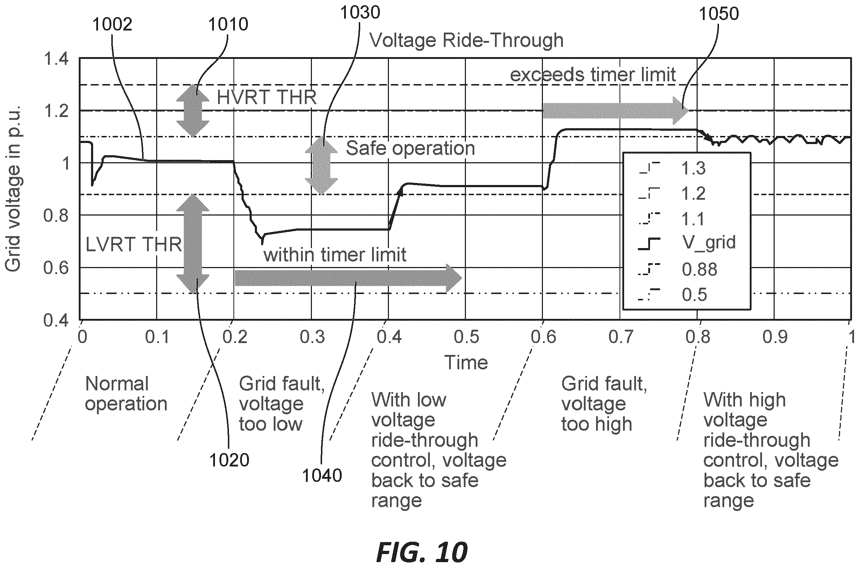

FIG. 10 illustrates an example of voltage ride through according to the IEEE 1547 code. The solid curve 1002 is the grid voltage (normalized) plotted as a function of time. The voltage band indicated by the vertical double arrow 1030 is the normal operating voltage range (e.g., between the values of 0.88 and 1.1). The voltage band indicated by the vertical double arrow 1010 is the high voltage ride through (HVRT) voltage range (e.g., between the values of 1.1 and 1.3). The voltage band indicated by the vertical double arrow 1020 is the low voltage ride through (LVRT) voltage range (e.g., between the values of 0.5 and 0.88). The horizontal arrow 1040 indicates the LVRT timer limit. In this example, because the time duration in which measured PCC voltage stays in the LVRT voltage range is below the LVRT timer limit, the system does not trip. With the LVRT control, the voltage is back to the normal operating range. The horizontal arrow 1050 indicates the HVRT timer limit. Because the time duration in which the PCC voltage stays in the HVRT voltage range exceeds the HVRT timer limit, the microgrid breaker at PCC is tripped.

Below is an exemplary algorithm for setting the parameters for LVRT trip timer. The algorithm can support a variety of national grid codes. Similar to the regulation curves, the various piecewise linear regions of a voltage ride through curve are delineated by end points. These end points can be captured by an array of V1,T1... Vn,Tn, for code-specific trip time regions vs Vpcc.

```
IF F_in_range AND NOT V_in_range THEN
     grid_modes := 2;
     T,uv := ET_VRT(V_grid);
```

```
(*Identify Trip Time Array by Code*)
CASE reg_code OF
```

Table 5 shows the settings for V1,T1...Vn,Tn, for the England code, the German code, the Italian code, and the American code.

Table 5

| National Code | V5 | T5 | V4 | T4 | V3 | T3 | V2 | T2 | V1 | T1 |
|---|---|---|---|---|---|---|---|---|---|---|
| England (4) | 0.95 | 300 | 0.85 | 60 | 0.85 | 2.2 | 0.15 | 0.15 | 0.15 | 0 |
| German (3) | 0.95 | 300 | 0.85 | 60 | 0.85 | 3.0 | 0.15 | 0.15 | 0.15 | 0 |
| Italian (2) | 0.92 | 180 | 0.85 | 60 | 0.85 | 1.5 | 0.15 | 0.2 | 0.15 | 0 |
| U.S.A. (1) | 0.88 | 20 | 0.7 | 20 | 0.7 | 10 | 0.5 | 10 | 0.5 | 1 |

For the IEEE 1547 code, the LVRT curve has steps, as shown in FIG. 8. Thus, the piecewise linear regions include horizontal and vertical sections. For example, the vertical section (in terms of trip timer vs voltage) between the end points 852 and 854 can be defined by the parameters (V1,T1) and (V2,T2), where V1 = V2; the horizontal section between the end points 854 and 856 can be defined by the parameters (V2,T2) and (V3,T3), where T2=T3; the vertical section between the end points 856 and 858 can be defined by the parameters (V3,T3) and (V4,T4), where V3 = V4; the horizontal section between the end points 858 and 860 can be defined by the parameters (V4,T4) and (V5,T5), where T4 = T5.

For the CE10-16 code, the LVRT curve includes a linear region defined by the end points 930 and 940. This region is rather broad (e.g., in the voltage range 0.15 < V < 0.85). It may require sharp response time at the low voltage end (e.g., trip timer ~ 200 ms). In the voltage range close to the normal range (e.g., 0.85 < V < 1.15), the trip timer is between 1.0 - 1.5 seconds.

The first condition to be addressed is the vertical section, if V1=V2 or V2=V3. After this condition is addressed by the first statement, the next statement in the code considers the horizontal and linear regions as such: (V-V2)*(T3-T2)/(V3-V2) + T2. This handles the horizontal section between the end points 854 and 856 in FIG. 8 or between the ends points 920 and 930 in FIG. 9, as well as the linear section between the end points 930 and 940 in FIG. 9.

According to some embodiments, with cycle time at 100 ms and transmission delay contributing about another 100 ms, the trip timer may be calculated in the PLC, and then delivered to a relay as the trip timer parameter in the UV function. This may ensure that the timer is executed faithfully so long as the voltage is sampled and held for at least a cycle (100-150 ms), and the parameter T,uv is updated before the relay expires.

Below is an exemplary algorithm.

```
IF V_pcc.V_min < V1 THEN

        RT_sel.UV1 := TRUE;

        ET_VRT := T1;

ELSIF V_pcc.V_min < V2 THEN

        RT_sel.UV1 := TRUE;

        ET_VRT := T2;

ELSIF V_pcc.V_min < V3 THEN

        RT_sel.UV2 := TRUE;

        high_timer := TIME_TO_REAL(T3);

        low_timer := TIME_TO_REAL(T2);

        delta_timer := high_timer - low_timer;

ET_VRT := REAL_TO_TIME(delta_timer*(V_pcc.V_min-V2)/(V3-V2) +
low_timer);

END_IF;                RETURN(T,uv := ET_VRT).
```

Parameterize Modbus Communication

According to some embodiments, for step 230 in FIG. 2, for each DER, first the IP addresses of the registers are decoded to double word. The IP addresses can be sorted in chronological order, from the first register to the last register. The size of the address space needed can be calculated as the length (NB) from the first register's address to the last register's address. Messages are then crafted. In some embodiments, time for consecutive read messages can increment by ten milliseconds for each DER (e.g., at twice the rate of PCC measurements taken at the circuit breaker). Each message can be active for 5 ms duration. Any error can be decoded into a string to check packets on the network LAN.

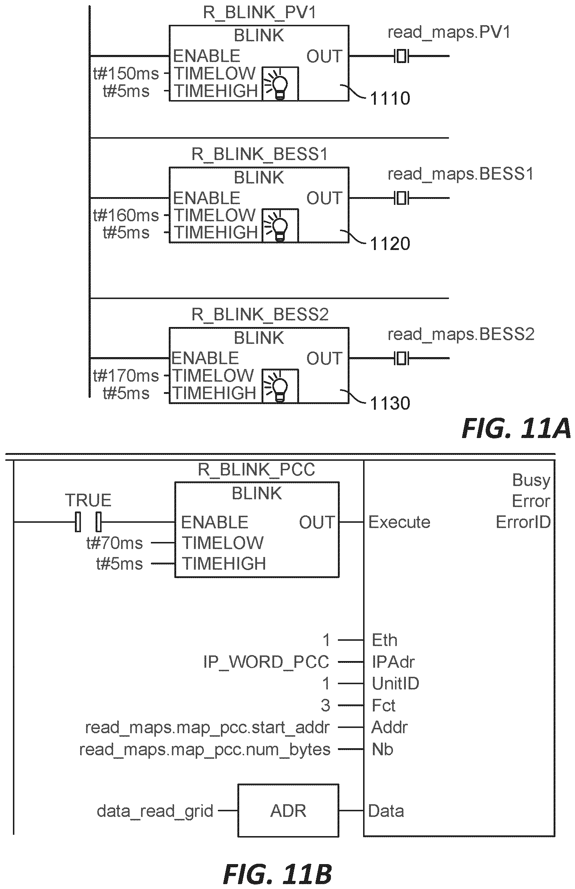

FIGS. 11A and 11B illustrate consecutive read messages to a plurality DERs 1110, 1120, and 1130 (e.g, PV1, BESS1, BESS2) according to some embodiments. For example, the read message to the DER 1110 is at 150 ms, the read message to the DER 1120 is at 160 ms, and the read message to the DER 1130 is at 170 ms, and so on. Each read message is active for 5 ms.

For the controller to adhere to grid code requirements, meet the energy management needs, and communicate with the outside world, the controller needs a variety of data as inputs from the DERs. According to some embodiments, a set of functional variables is defined based on the PCC functions. Each functional variable is assigned to a respective register of a DER, so that the controller can locate the relevant input data.

According to some embodiments, for step 232 in FIG. 2, mappings are made for each DER pointing from the functional variables for PCC functions towards their Modbus register addresses. Table 6 shows an example of Modbus mapping for a generic DER according to some embodiments. In order to correctly locate the data from each DER, a lookup table can be used to match the name and IP address of each DER's registers. The user can then connect the registers of interest to PCC functions with register address pointers available in global variables.

According to some embodiments, all of the input data measured from a DER at the PCC are assigned to a data array data_read_grid. A parser can sort through the data array data_read_grid to generate a smaller data array data_in_pcc, which includes only those data relating to the functional variables, such as voltage, current, frequency, and the like. Thus, the data in the smaller data array data_in_pcc is a subset of the input data in the larger data array data_read_grid.

Below is an exemplary algorithm for the parser. A for loop is run for each device within the microgrid's control, starting with the PCC breaker and then moving to storage devices.

```
FOR read_count := 0 TO pcc_size BY 1 DO
 pcc_map_index := (pcc_addr_index[read_count] - start_address[0])/2;
 data_in_pcc[read_count] := pcc_input_regs[pcc_map_index]; END_FOR;
 FOR read_count := 0 TO bess_size BY 1 DO
 bess1_map_index:=(bess1_addr_index[read_count] - start_address[1])/2;
 data_in_bess1[read_count] := bess1_in_regs[bess1_map_index]; END_FOR;
```

After the registers have been mapped to the functional variables, the input array data_read_grid can be set up for reading large swathes of data from each DER. The size of the read message can be determined by the length (NB) from the address of the first register to the address of the last register. The input array data_read_grid would need to be equal to or larger than the number of bytes read by the message. The large swathes of data in the input array data_read_grid can be sorted by the parser into the smaller data array data_in_pcc, as described above. According to some embodiments, the address array is equal in size to the data array data_in_pcc, ensuring that each functional variable is linked to an address pointer. This condition can be met for all devices complying to a standard "class" (e.g., load, generation, or storage) within the microgrid.

Parameterize the Aggregator

According to some embodiments, for the step 234 in FIG. 2, if there is any change in the configuration of the microgrid (e.g., any DER has entered or left the microgrid, or the state of charge of any DER changes), the controller can update the aggregate PQ polygon characteristics and manage the power traffic on the bus accordingly. If a DER has entered or left the microgrid, the MB_PRG and subordinate functions can update the polling rate on DERs according to the number of DERs active in the loop (e.g., as illustrated in FIGS. 11A and 11B). The controller can dynamically update its control loop and the aggregate PQ boundaries as the functional parameters change in the microgrid, as discussed in more detail below.

Polling Devices in the Network

First, the controller defines all DERs in the microgrid, and sets the functional parameters in global variables to address a minimum data array needed for each DER according to its class. According to some embodiments, this process can include the following steps: (i) identifying the grid code and any categories of the DERs, (ii) defining the nominal voltage and the nominal frequency, (iii) providing addresses of the input registers of each DER (e.g., according to Table 6), and (iv) determining how many DERs of each class (e.g., loads, PVs, BESS's) in the microgrid. According to some embodiments, a microgrid can include up to 30 loads, 3 PVs, 3 BESS's, and 1 circuit breaker. The addresses of the following holding registers in the Modbus map can be specified: the trip coil (e.g., the circuit breaker) at the PCC, PQ setpoints for all BESS's, and the load coils in case of demand response. Input registers are found in Table 6.

Table 6

| Name | comments | type | register | unit |
|------|----------|------|----------|------|
| PCC_Frequency | Frequency of PCC | Float | 0 | Hz |
| PCC_Breaker | Operate the breaker | Coil | 1 | bool |
| PCC_V_RMS_A | RMS of PCC Va | Float | 2 | p.u. |
| PCC_V_RMS_B | RMS of PCC Vb | Float | 4 | p.u. |
| PCC_V_RMS_C | RMS of PCC Vc | Float | 6 | p.u. |
| PCC_V_pos | Positive sequence voltage of PCC | Float | 8 | V. |
| PCC_P | Real power of PCC | Float | 10 | p.u. |
| PCC_Q | Reactive power of PCC | Float | 12 | p.u. |
| BESS1_SOC | State of charge for BESS 1 | Float | 60 | % |
| BESS2_SOC | State of charge for BESS 2 | Float | 80 | % |
| PV_P | Real power of PV | Float | 100 | p.u. |

(continued)

| Name | comments | type | register | unit |
|------|----------|------|----------|------|
| PV_Q | PV reactive power | Float | 102 | p.u. |

In some embodiments, the communication channel of the controller can check incoming data from the DERs to verify whether register addresses are set properly. If invalid register addresses are found, the DER can be disabled. Disabling or changing any DER within the microgrid can trigger a reinitialization. Reshaping of microgrid size by the quantity of valid devices is performed by a subordinate PLC function 'Read Maps.' The evolution of the microgrid as controllable devices change over time is reported to the PQ polygon. The controller can use updated DER conditions to define aggregate bounds on the microgrid as the sum of the powers available in individual DERs, as described in more detail below. The simplicity in aggregate is made possible by the generic data structure provided according to embodiments of this disclosure.

Devices of all classes (e.g., generation, storage, and load) can constantly reshape the PQ polygon as the microgrid evolves. According to some embodiments, when a new device is activated, the controller first parses its Modbus map for all registers to data needed to comply with the data type for the device's class. If the new DER is approved, the controller can add the new DER's rated power to the PCC aggregate, and can poll for it in the next DER time slot (as illustrated in FIGS. 11A and 11B). Conversely, if the new DER is found not in compliance, the controller can remove the new DER's rated power from the PCC aggregate, and can slow down the polling rate of the new DER by 100 times. This can free up a DER time slot on the message queue to poll for other devices and optimize throughput.

Shaping the PQ Polygon

After the controller has read the data from the DERs in the microgrid, run the PCC functions, and calculated the output from the aggregate P & Q proportional-integral (PI) controller (e.g., performed by the EMSM 226 in FIG. 2), setpoints are distributed to dispatchable generation or (charged) storage units. The controller can determine which storage units are charged based on their state of charge (S.O.C.), which can influence the aggregate PQ polygon.

According to some embodiments, the allocation of power provided by the storage units is determined according to the fractional state of charge (S.O.C.) of each storage unit relative to the total S.O.C. cumulated in all storage units. The fractional S.O.C. of a storage unit BESS(n) can be defined as:

*fractional*

$$S.O.C._{bess(n)} = \frac{S.O.C._{bess(n)}}{total\ S.O.C._{bess(1...n)}},$$

where $S.O.C._{bess(n)}$ is the S.O.C. of the storage unit BESS(n), and *total* $S.O.C._{bess(1...n)}$ is the total S.O.C. of all the storage units in the microgrid.

According to some embodiments, the controller can dynamically classify each storage unit in the microgrid as "generation only" (gen), "balanced," or "absorption only" (abs), based on the fractional S.O.C. of each storage unit. For example, if the fractional S.O.C. of a storage unit is greater than a first threshold (e.g. 80%), that storage unit can be classified as "generation only"; if the fractional S.O.C. is less than a second threshold (e.g. 20%), that storage unit can be classified as "absorption only"; if the fractional S.O.C. is between the first threshold and the second threshold, that storage unit can be classified as "balanced." Those units characterized as generation only or balanced can be considered charged. Units characterized as absorption only can be considered charging. After each storage unit has been classified the total controllable power available in each direction (generation and absorption, respectively) at the PCC can be evaluated:

$$P_{pcc(gen)} = P_{pcc(nom)} * \frac{\#\ storage\ units\ charged}{\#\ batteries\ in\ control} = \sum_1^n P_n^+ * \frac{\sum bess\_n\_gen}{\sum bess\_n\_tot},$$

$$P_{pcc(abs)} = P_{pcc(nom)} * \frac{\#\ storage\ units\ charging}{\#\ storage\ units\ in\ control} = \sum_1^n P_\square * \frac{\sum bess\_n\_abs}{\sum bess\_n\_tot},$$

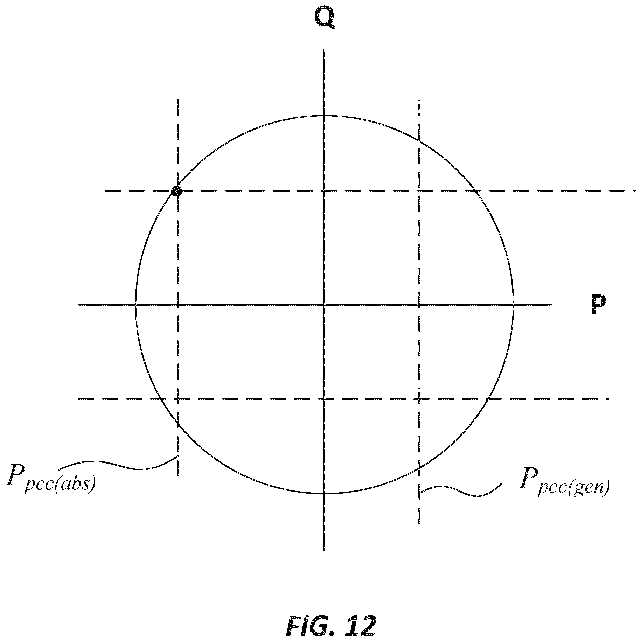

where $P_{pcc(gen)}$ is the total active power generated (maximum magnitude of positive active power) at the PCC, $P_{pcc(abs)}$ is the total active power available for absorption (maximum magnitude of negative active power) at the PCC, and $P_{pcc(nom)}$ is the nominal power at the PCC. The values of $P_{pcc(gen)}$ and $P_{pcc(abs)}$ can set the boundaries of a PQ polygon, as illustrated in FIG. 12.

According to some embodiments, the de-aggregation of power to the individual storage units (allocation of the active power to be provided by the individual storage units) is set as follows:

$$P_{bess(n)} = P_{pcc(gen)} * \frac{S.O.C._{bess(n)}}{total\ S.O.C._{bess(1...n)}},$$

where $P_{bess(n)}$ is the power setpoint for the storage unit BESS(n).

When absorbing power from the PCC, the reciprocal of S.O.C. can be used to determine which storage units are optimal for power storage (to be charged). For example, the storage units that have the lowest charge can be designated for power storage. According to some embodiments, if real power is to be absorbed at the PCC, the controller makes use of the parameter bess[n]_true_soc, defined as follows:

```
If PCC Pref > 0 Then
BESS1_true_soc := data_in_bess1[soc];
ELSIF PCC Pref < 0 Then
BESS1_true_soc := 100 - data_in_bess1[soc].
```

The de-aggregation of power to be absorbed by the individual storage units is set as follows:

$$P_{bess(n)} = P_{pcc(abs)} * \frac{true\ S.O.C._{bess(n)}}{total\ true\ S.O.C._{bess(1...n)}}$$

where $P_{bess(n)}$ is the power setpoint for the storage unit BESS(n).

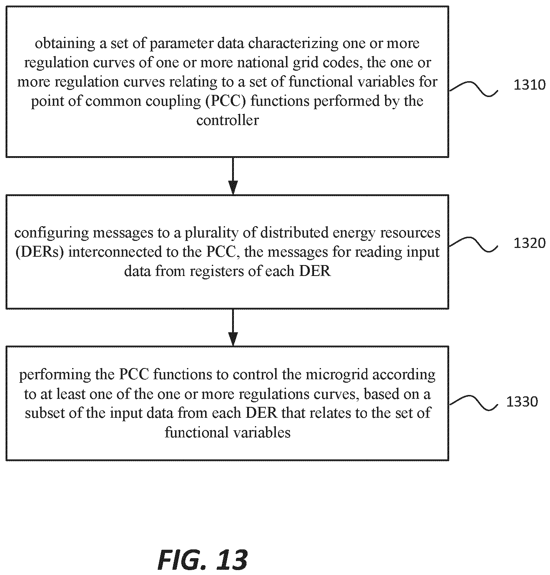

FIG. 13 is a flowchart illustrating a method of operating a microgrid controller according to some embodiments. The method includes, at 1310, obtaining a set of parameter data characterizing one or more regulation curves of one or more national grid codes. The one or more regulation curves relate to a set of functional variables for point of common coupling (PCC) functions performed by the controller. The method further includes, at 1320, configuring messages to a plurality of distributed energy resources (DERs) interconnected to the PCC. The messages are configured for reading input data from registers of each DER. The method further includes, at 1330, performing the PCC functions to control the microgrid according to at least one of the one or more regulations curves, based on a subset of the input data from each DER that relates to the set of functional variables.

According to some embodiments, the method further includes, obtaining a register mapping for each respective DER, the register mapping linking a subset of the registers of the respective DER to the set of functional variables, and parsing the input data to obtain the subset of the input data using the register mapping. Each DER of the plurality of DERs can be classified into one of a load, a source, or a storage.

According to some embodiments, each respective regulation curve specifies a relationship between two functional variables of the set of functional variables. Each respective regulation curve includes piecewise linear regions delineated by a plurality of end points. The set of parameter data can include coordinates of the plurality of end points delineating the piecewise linear regions. The one or more national grid codes can be selected from a predefined library of national grid codes. The predefined library of national grid codes can include, for example, the IEEE 1547 Code, the CE10-16 Code, or the VDE AR4110 Code. In some embodiments, the set of parameter data characterizing the one or more regulation curves of the one or more national grid codes can be preloaded in the controller.

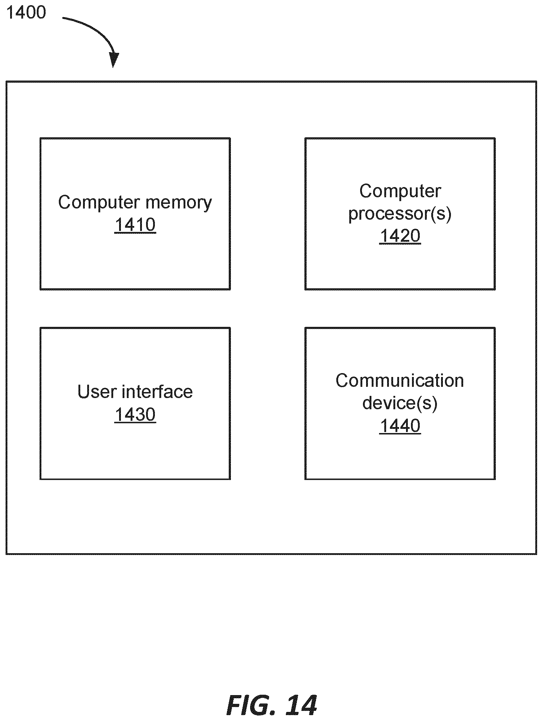

FIG. 14 is a simplified block diagram of a controller 1400 for controlling a microgrid according to some embodiments. The controller 1400 includes a computer memory 1410 and one or more computer processors 1420. The computer memory 1410 can be configured to store a set of parameter data characterizing one or more regulation curves of one or more national grid codes. The one or more regulation curves relate to a set of functional variables for PCC functions. The one or more computer processors can be configured to send messages to the plurality of DERs for reading input data from registers of each DER, and perform the PCC functions to control the microgrid according to at least one of the one or more regulations curves, based on a subset of the input data from each DER that relates to the set of functional variables.

The controller 1400 can further include a user interface 1430. For example, the user interface 1430 can allow a user to enter parameter data characterizing additional regulation curves of additional national grid codes, which can be saved in the computer memory 1410. The controller 1400 can further include communication devices 1440. For example, the communication devices 1440 can include wired and/or wireless communication devices for communicating with the DERs or the outside world.

As described above, embodiments of the present disclosure provide a method of initializing a low-voltage AC microgrid controller that can be readily adapted to comply with a variety of national grid codes and to read relevant data from a variety of DERs. As DERs enter and leave the microgrid, the microgrid controller can dynamically reshape the aggregate boundaries of the PCC control loop. Embodiments of the present disclosure can afford robust control at the PCC while allowing for organic DER growth at industrial sites.

While subject matter of the present disclosure has been illustrated and described in detail in the drawings and foregoing description, such illustration and description are to be considered illustrative or exemplary and not restrictive. Any statement made herein characterizing the invention is also to be considered illustrative or exemplary and not restrictive as the invention is defined by the claims. It will be understood that changes and modifications may be made, by those of ordinary skill in the art, within the scope of the following claims, which may include any combination of features from different embodiments described above.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

**Claims**

1. A method for operating a controller for a microgrid, the method comprising:

   obtaining a set of parameter data characterizing one or more regulation curves of one or more national grid codes, the one or more regulation curves relating to a set of functional variables for point of common coupling (PCC) functions performed by the controller;
   configuring messages to a plurality of distributed energy resources (DERs) interconnected to the PCC, the messages for reading input data from registers of each DER; and
   performing the PCC functions to control the microgrid according to at least one of the one or more regulations curves, based on a subset of the input data from each DER that relates to the set of functional variables.

2. The method of claim 1, further comprising:

   obtaining a register mapping for each respective DER, the register mapping linking a subset of the registers of the respective DER to the set of functional variables; and
   parsing the input data from the respective DER to obtain the subset of the input data using the register mapping.

3. The method of claim 2, wherein each DER of the plurality of DERs is classified into one of a load, a source, or a storage.

4. The method of claim 1, wherein each respective regulation curve specifies a relationship between two functional variables of the set of functional variables, and each respective regulation curve comprises piecewise linear regions delineated by a plurality of end points, and wherein the set of parameter data includes coordinates of the plurality of end points delineating the piecewise linear regions.

5. The method of claim 4, wherein the one or more regulation curves include one or more of a reactive power vs voltage curve (Volt-Var), a reactive power vs active power curve (Watt-Var), a reactive power vs power factor curve (PF-Var), an active power vs voltage curve (Volt-Watt), a low voltage ride-through (LVRT) curve, a high voltage ride-through (HVRT) curve, or a frequency droop curve.

6. The method of claim 1, wherein the one or more national grid codes are selected from a predefined library of national grid codes.

7. The method of claim 6, wherein the one or more national grid codes include two or more different national grid codes, wherein the one or more regulation curves include a plurality of regulation curves of the two or more different national grid codes, and wherein the set of parameter data characterizing the plurality of regulation curves have a common data format across the different national grid codes.

8. The method of claim 1, wherein the set of parameter data characterizing the one or more regulation curves of the one or more national grid codes is preloaded in the controller.

9. The method of claim 1, further comprising:

receiving from a user additional parameter data characterizing one or more additional regulation curves of one or more additional national grid codes; and
saving the additional parameter data in the controller.

10. The method of claim 1, further comprising:

allocating aggregate active power among the plurality of DERs based on a fractional state of charge (S.O.C.) of each DER relative to a total S.O.C. cumulated in the plurality of DERs.

11. The method of claim 10, further comprising:
upon detecting one of (i) a new DER entering the microgrid, (ii) an existing DER leaving the microgrid, or (iii) a change in any of the plurality of DERs, updating the allocation of aggregate active power.

12. A controller for controlling a microgrid, the microgrid including a plurality of distributed energy resources (DERs) interconnected to a point of common coupling (PCC), the controller comprising:

a memory configured to store a set of parameter data characterizing one or more regulation curves of one or more national grid codes, the one or more regulation curves relating to a set of functional variables for PCC functions; and
one or more processors configured to
send messages to the plurality of DERs for reading input data from registers of each DER; and
perform the PCC functions to control the microgrid according to at least one of the one or more regulations curves, based on a subset of the input data from each DER that relates to the set of functional variables.

13. The controller of claim 12, wherein:

the memory is further configured to store a register mapping for each respective DER, the register mapping linking a subset of the registers of the respective DER to the set of functional variables; and
the one or more processors are further configured to parse the input data from respective DER to obtain the subset of the input data using the register mapping.

14. A non-transitory computer-readable medium having instructions stored thereon which, upon being executed by one or more hardware processors, causing performance of a method for operating a controller for a microgrid, the method comprising:

obtaining a set of parameter data characterizing one or more regulation curves of one or more national grid codes, the one or more regulation curves relating to a set of functional variables for point of common coupling (PCC) functions performed by the controller;
configuring messages to a plurality of distributed energy resources (DERs) interconnected to the PCC, the messages for reading input data from registers of each DER; and
performing the PCC functions to control the microgrid according to at least one of the one or more regulations curves, based on a subset of the input data from each DER that relates to the set of functional variables.

**FIG. 1**

FIG. 2

**FIG. 3**

$V_L$: Voltage Lower Limit for DER Continuous operation
$V_H$: Voltage Upper Limit for DER Continuous operation

**FIG. 4**

*FIG. 5*

*FIG. 6*

*FIG. 7*

**FIG. 8**

FIG. 9

**FIG. 10**

R_BLINK_PV1

BLINK

| ENABLE | OUT | read_maps.PV1 |

t#150ms — TIMELOW
t#5ms — TIMEHIGH

1110

R_BLINK_BESS1

BLINK

| ENABLE | OUT | read_maps.BESS1 |

t#160ms — TIMELOW
t#5ms — TIMEHIGH

1120

R_BLINK_BESS2

BLINK

| ENABLE | OUT | read_maps.BESS2 |

t#170ms — TIMELOW
t#5ms — TIMEHIGH

1130

**FIG. 11A**

R_BLINK_PCC

Busy
Error
ErrorID

TRUE

BLINK

ENABLE     OUT — Execute

t#70ms — TIMELOW
t#5ms — TIMEHIGH

1 — Eth
IP_WORD_PCC — IPAdr
1 — UnitID
3 — Fct
read_maps.map_pcc.start_addr — Addr
read_maps.map_pcc.num_bytes — Nb

data_read_grid — ADR — Data

**FIG. 11B**

**FIG. 12**

obtaining a set of parameter data characterizing one or more regulation curves of one or more national grid codes, the one or more regulation curves relating to a set of functional variables for point of common coupling (PCC) functions performed by the controller — 1310

configuring messages to a plurality of distributed energy resources (DERs) interconnected to the PCC, the messages for reading input data from registers of each DER — 1320

performing the PCC functions to control the microgrid according to at least one of the one or more regulations curves, based on a subset of the input data from each DER that relates to the set of functional variables — 1330

# FIG. 13

1400

| | |
|---|---|
| Computer memory<br>1410 | Computer processor(s)<br>1420 |
| User interface<br>1430 | Communication device(s)<br>1440 |

**FIG. 14**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 36337523